(19) Europäisches Patentamt
European Patent Office
Office européen des brevets

(11) **EP 3 609 034 B1**

(12) **FASCICULE DE BREVET EUROPEEN**

(45) Date de publication et mention
de la délivrance du brevet:
**17.02.2021 Bulletin 2021/07**

(51) Int Cl.:
*H02J 3/00* *(2006.01)*   *H01H 7/16* *(2006.01)*
*H01H 9/56* *(2006.01)*   *H02J 9/06* *(2006.01)*
*H01H 47/18* *(2006.01)*   *H01H 50/86* *(2006.01)*

(21) Numéro de dépôt: **19180775.9**

(22) Date de dépôt: **18.06.2019**

(54) **PROCÉDÉ DE TRANSFERT SANS RECOUVREMENT DE SOURCES D'ÉNERGIE ÉLECTRIQUE ET INVERSEUR DE SOURCE METTANT EN OEUVRE UN TEL PROCÉDÉ**

**VERFAHREN ZUM ÜBERLAPPUNGSFREIEN UMSCHALTEN VON ELEKTRISCHEN ENERGIEQUELLEN UND QUELLENUMSCHALTER, DER DIESES VERFAHREN ANWENDET**

**METHOD FOR THE OVERLAP-FREE TRANSFER OF ELECTRIC POWER SOURCES AND SOURCE CHANGEOVER SWITCH IMPLEMENTING SUCH A METHOD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.08.2018 FR 1857401**

(43) Date de publication de la demande:
**12.02.2020 Bulletin 2020/07**

(73) Titulaire: **Schneider Electric Industries SAS**
**92500 Rueil Malmaison (FR)**

(72) Inventeurs:
• **BELLETTO, Jean-Luc**
  **38050 GRENOBLE (FR)**
• **REYMOND, Pascal**
  **38050 GRENOBLE (FR)**

(74) Mandataire: **Tripodi, Paul**
**Schneider Electric Industries SAS**
**Service Propriété Industrielle**
**World Trade Center - E1**
**5 Place Robert Schuman**
**38050 Grenoble Cedex 9 (FR)**

(56) Documents cités:
**EP-A2- 0 471 178**     **CN-B- 103 683 469**
**US-A1- 2016 233 720**   **US-A1- 2017 090 549**
**US-A1- 2017 366 040**   **US-B1- 9 570 253**

## Description

### DOMAINE TECHNIQUE

L'invention concerne un procédé pour transférer l'alimentation en énergie électrique d'une ligne de distribution électrique, d'une première source à une seconde source. L'invention concerne également un inverseur de sources destiné à commander au moins un premier interrupteur et un second interrupteur pour connecter, sans recouvrement, des sources d'énergie électrique à une ligne de distribution de l'énergie.

### ETAT DE LA TECHNIQUE

La disponibilité de l'énergie électrique est importante, par exemple pour les industries de production en flux continu. En effet, une coupure d'alimentation en énergie électrique peut générer des perturbations pouvant être à l'origine d'un arrêt d'une chaîne de production. Pour disposer d'une alimentation sécurisée et éviter de telles conséquences, un dispositif appelé généralement « inverseur de sources » est utilisé : dès qu'une première source d'énergie présente un risque de disparition, par exemple à cause d'une surchauffe d'un transformateur MT/BT, l'inverseur de sources commute l'arrivée de l'énergie électrique sur une seconde source d'énergie. Cette seconde source est une sortie d'un transformateur redondant de l'installation électrique, ou une ligne électrique de secours, ou encore un générateur autonome. Le transfert de la source d'alimentation en énergie électrique d'une première source à une seconde source nécessite que la première source et la seconde source soient synchronisées c'est-à-dire que l'amplitude et la phase de la première source et de la seconde source doivent être identiques, ou comprises entre certaines limites, au moment de la commutation. Cependant, même dans ce cas, des perturbations importantes peuvent apparaître quand des moteurs sont connectés sur la ligne d'alimentation. En effet, quand l'alimentation d'un moteur électrique disparaît, l'inertie mécanique du moteur et de sa charge ainsi que la rémanence magnétique du rotor amènent le moteur dans un mode de fonctionnement en générateur qui tend à compenser la source défaillante. La vitesse de rotation du moteur décroit plus ou moins rapidement en fonction du couple résistant qui s'oppose à l'inertie de l'ensemble moteur et charge. La fréquence et la phase de la tension fournies par le moteur s'éloignent de la fréquence et de la phase du réseau. Une réalimentation par une source d'énergie ayant une fréquence et/ou une phase différente provoque surtensions, surintensités et à-coups mécaniques pouvant affecter le moteur ou l'installation électrique. Les effets sont encore amplifiés quand plusieurs moteurs sont alimentés par la même source d'énergie. Il est donc fondamental d'effectuer le transfert de source le plus rapidement possible, de préférence pendant une durée de transfert prédéfinie, suffisamment longue pour que les transitoires liées à une déconnexion d'une source puissent s'annuler ou s'atténuer fortement, et suffisamment courte pour que le/les moteurs n'aient pas le temps de ralentir de manière trop importante. Une durée de transfert de quelques dizaines de millisecondes est optimale pour des équipements industriels de puissance comprenant des moteurs.

Le document US 2014/001 860 A1 décrit un procédé de transfert de sources comportant une mesure des paramètres électriques, puis un calcul des écarts de tension et de phase entre la tension de la source de secours et la tension générée par le moteur Ce procédé demande des mesures de paramètres électriques, tension, phases, et commande un transfert pour un écart de phase pouvant atteindre 90°. Un tel écart de phase peut être à l'origine de perturbations importantes sur le fonctionnement de moteurs de forte puissance.

Le document EP 1 014 534 A1 décrit un inverseur de sources capable de transférer les sources dans un temps minimal et pour cela met en œuvre des interrupteurs rapides. Le système ne prend pas en compte les temps d'ouverture et de fermeture des interrupteurs ce qui peut amener à une transition « fermée », c'est-à-dire que la source principale défaillante et la source de secours sont connectées l'une à l'autre fugitivement pendant le temps nécessaire à la commutation des sources ce qui peut être à l'origine de sur-intensités dans certaines parties du circuit électrique. D'autre part le coût d'un interrupteur rapide est beaucoup plus élevé que le coût d'un interrupteur standard et la durée de transfert de sources, bien que faible, ne peut être limitée à seulement quelques dizaines de millisecondes.

Le document US2016/233720 décrit un système électrique qui permet le transfert de l'alimentation en énergie électrique d'un dispositif de charge protégée d'une première source à une seconde source et sans recouvrement.

Les documents EP0471178 et CN103683469 décrivent des systèmes électriques qui permettent le transfert de l'alimentation en énergie électrique d'une première source à une seconde source et sans recouvrement.

L'invention a pour objet un procédé et un dispositif inverseur de sources pour des charges telles que des moteurs de forte puissance permettant de garantir une commutation rapide d'une source défaillante vers une source de secours, ou inversement quand la source défaillante a retrouvé ses propriétés nominales.

### EXPOSE DE L'INVENTION

L'invention porte sur un procédé pour transférer, pendant une durée de transfert prédéfinie, l'alimentation en énergie électrique d'une ligne de distribution électrique, d'une première source à une seconde source, sans recouvrement des deux sources, un premier interrupteur, relié d'une part à la première source et d'autre part à la ligne de distribution, étant commandé pour se fermer ou s'ouvrir afin de connecter ou déconnecter la première source à la ligne de distribution, un second interrupteur, relié d'une part à la seconde source et d'autre part à la ligne de distribution, étant commandé pour se fermer ou s'ouvrir afin de connecter ou déconnecter la seconde source à ladite ligne de distribution, tel que :

-    soit une première temporisation est appliquée avant une commande d'ouverture du premier interrupteur quand une deuxième durée de manœuvre pour connecter la seconde source est supérieure à la somme d'une troisième durée de manœuvre pour déconnecter la première source et de la durée de transfert,
-    soit une seconde temporisation est appliquée avant une commande de fermeture du second interrupteur quand la deuxième durée de manœuvre pour connecter la seconde source est inférieure à la somme de la troisième durée de manœuvre pour déconnecter la première source et de la durée de transfert,

la première temporisation ou la seconde temporisation étant calculées pour que l'intervalle de temps entre une déconnexion de la première source et une connexion de la seconde source soit égal à la durée de transfert.

Avantageusement, le procédé comporte une étape de calcul :

-    d'une valeur moyenne d'une première durée de manœuvre pour connecter la première source à la ligne de distribution,
-    d'une valeur moyenne de la deuxième durée de manœuvre pour connecter la seconde source à la ligne de distribution,
-    d'une valeur moyenne de la troisième durée de manœuvre pour déconnecter la première source de la ligne de distribution, et
-    d'une valeur moyenne d'une quatrième durée de manœuvre pour déconnecter la seconde source de la ligne de distribution.

De préférence, la première temporisation est égale à la deuxième durée de manœuvre pour connecter la seconde source moins la somme de la troisième durée de manœuvre pour déconnecter la première source et de la durée de transfert.

De préférence, la seconde temporisation est égale à la somme de la troisième durée de manœuvre pour déconnecter la première source et de la durée de transfert moins la deuxième durée de la manœuvre pour connecter la seconde source.

Préférentiellement, la durée de transfert est comprise entre 10 ms et 50 ms.

Préférentiellement, une fenêtre d'observation d'une durée d'observation prédéfinie est ouverte simultanément avec la commande de fermeture du second interrupteur.

De préférence, une ouverture du second interrupteur est commandée quand un indicateur de fermeture du second interrupteur n'est pas délivré pendant la durée d'observation.

Préférentiellement, l'indicateur de fermeture du second interrupteur est délivré pendant une exécution d'un mouvement de fermeture des contacts dudit second interrupteur.

Selon une première variante, l'indicateur de fermeture du second interrupteur est délivré quand des contacts dudit second interrupteur sont fermés.

Selon une seconde variante, l'indicateur de fermeture du second interrupteur est délivré quand des contacts dudit second interrupteur ne sont plus ouverts.

L'invention a également pour objet un inverseur de sources destiné à commander au moins un premier interrupteur et un second interrupteur pour transférer, sans recouvrement, l'alimentation en énergie électrique d'une ligne de distribution de l'énergie d'une première source à une seconde source (2),
le premier interrupteur comportant au moins :

-    un premier actionneur de fermeture pour commander une manœuvre de fermeture du premier interrupteur,
-    un premier actionneur d'ouverture pour commander une manœuvre d'ouverture du premier interrupteur, et
-    un premier capteur pour fournir un premier signal indicateur de fermeture du premier interrupteur,

le second interrupteur comportant au moins :

-    un second actionneur de fermeture pour commander une manœuvre de fermeture du second interrupteur,
-    un second actionneur d'ouverture pour commander une manœuvre d'ouverture du second interrupteur, et
-    un second capteur pour fournir un second signal indicateur de fermeture du second interrupteur,

l'inverseur de source comportant :

-    au moins une première liaison connectée au premier capteur pour recevoir un premier signal indicateur de fermeture du premier interrupteur et une deuxième liaison pour recevoir un second signal indicateur de fermeture du second interrupteur,
-    au moins une troisième liaison pour commander le premier actionneur d'ouverture et une quatrième liaison pour commander le second actionneur d'ouverture,
-    au moins une cinquième liaison pour commander le premier actionneur de fermeture et une sixième liaison pour commander le second actionneur de fermeture, et
-    une unité de traitement pour la mise en œuvre du procédé de connexion tel que décrit précédemment.

De préférence, les premier et second actionneurs de fermeture des premier et second interrupteurs sont activés par une tension continue et l'inverseur de source émet une tension continue sur les cinquième et sixième liaisons pour commander respectivement les premier et second actionneurs de fermeture du premier et du second interrupteur.

De préférence, les premier et second actionneurs d'ouverture des premier et second interrupteurs sont activés par une tension continue et l'inverseur de source émet une tension continue sur les troisième et quatrième liaisons pour commander respectivement les premier et second actionneurs d'ouverture du premier et du second interrupteur.

L'invention concerne également un interrupteur électrique, destiné à être commandé par un inverseur de source tel que décrit précédemment, ledit interrupteur comportant au moins :

- au moins une borne de raccordement amont destinée à être connectée à une source fournissant une énergie électrique,
- au moins une borne de raccordement aval destinée à être connectée à une ligne de distribution d'énergie électrique,
- des contacts électriques pour établir ou interrompre la circulation d'énergie entre au moins la borne amont et la borne aval,
- un actionneur d'ouverture pour actionner un mécanisme d'ouverture des contacts électriques,
- un actionneur de fermeture pour actionner un mécanisme de fermeture des contacts électriques,

ledit interrupteur étant tel que l'actionnement du mécanisme d'ouverture des contacts électriques agit sur le mécanisme de fermeture des contacts pour interrompre un mouvement de fermeture desdits contacts.

## BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

- la figure 1 est une représentation schématique d'une première configuration d'installation électrique permettant un transfert d'une première source vers une seconde source au moyen de deux interrupteurs,
- la figure 2 est une représentation schématique d'une variante de configuration d'installation électrique permettant un transfert de sources,
- les figures 3A à 3G représentent des chronogrammes de commande des interrupteurs, d'apparition de signaux et d'états des sources dans un premier cas de transfert d'alimentation sans défaut,
- les figures 4A à 4G représentent des chronogrammes de commande des interrupteurs, d'apparition de signaux et d'états des sources dans un second cas de transfert d'alimentation sans défaut,

- les figures 5A à 5G représentent des chronogrammes de commande des interrupteurs, d'apparition de signaux et d'états des sources dans un cas de transfert d'alimentation pour lequel une durée de transfert prédéfinie ne peut être respectée,
- la figure 6 représente, sous la forme d'un organigramme, un procédé de commande de deux interrupteurs pour effectuer un transfert d'alimentation en énergie électrique d'une première source à une seconde source,
- la figure 7 représente un schéma bloc d'un inverseur de sources représentant les connections d'entrée/sortie pour la mise en œuvre du procédé de commande de deux interrupteurs,
- la figure 8 représente un interrupteur électrique sous forme d'un synoptique pour illustrer le fonctionnement d'un mécanisme d'ouverture et de fermeture de contacts électriques.

## DESCRIPTION DETAILLEE DE MODES DE REALISATION PREFERES

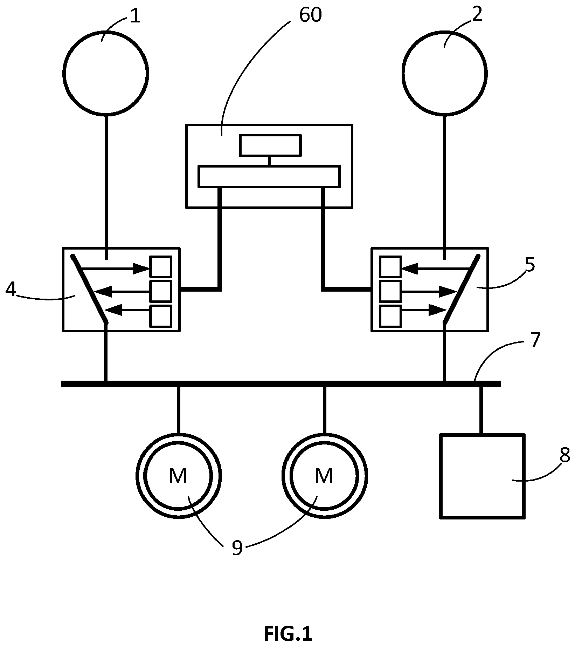

La figure 1 est une représentation schématique classique d'une installation électrique comportant un inverseur de sources. Une première source 1 fournit l'énergie électrique à une ou plusieurs charges 8, 9. La première source peut être, par exemple, un réseau de distribution d'énergie électrique ou une sortie d'un transformateur MT/BT. Un premier type de charge 8 est composé d'un équipement ou d'un ensemble de plusieurs équipements électriques. Un second type de charge 9 est composé des moteurs. Un premier interrupteur 4, connecté en amont à la première source 1 et en aval à une ligne de distribution 7, par exemple un jeu de barre, est commandé pour se fermer ou s'ouvrir afin de connecter ou déconnecter la première source 1 à la ligne de distribution 7. Les charges 8, 9 sont connectées à la ligne de distribution 7. Le premier interrupteur 4 est préférentiellement un disjoncteur mais peut être également un contacteur ou un relais. L'interrupteur 4 comporte des contacts 41 pour établir ou interrompre liaison entre la première source 1 et la ligne de distribution 7 et comporte des actionneurs de commande d'ouverture et de fermeture des contacts 41.

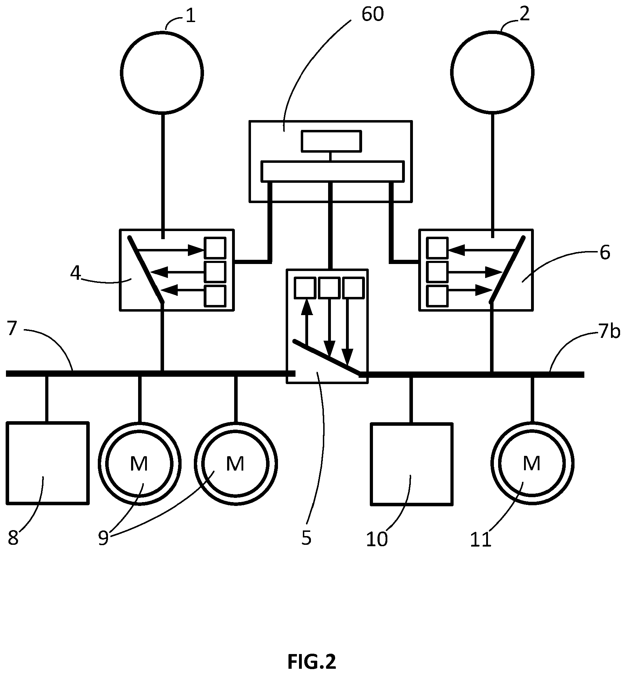

En cas de prévision d'indisponibilité ou d'action volontaire d'ouverture de la première source 1, par exemple suite à une surcharge en amont de l'installation, une seconde source 2 d'énergie électrique est utilisée pour continuer à alimenter les charges 8, 9. Cette seconde source peut être, par exemple, un générateur local tel qu'un groupe électrogène, une seconde ligne électrique ou encore une sortie d'un transformateur redondant de l'installation électrique. Un second interrupteur 5, connecté en amont à la seconde source 2 et en aval à la ligne de distribution 7, est commandé pour se fermer ou s'ouvrir afin de connecter ou déconnecter la seconde source 2 à ladite ligne de distribution 7. Dans le cas où le second interrupteur 5 est fermé pour connecter la seconde source 2 à la ligne de distribution 7, le premier interrupteur 4 est ouvert de façon à ce qu'il n'y ait pas d'interaction entre la première source 1 et la deuxième source 2, tout particulièrement lorsque la première source 1 redevient disponible. Le second interrupteur 5 est préférentiellement similaire au premier interrupteur 4. En variante, ainsi que représenté en figure 2, sont représentés deux réseaux électriques séparés en fonctionnement normal. Un premier réseau comprenant la première source 1 alimente les premier et deuxième types de charges 8, 9 et un second réseau comprenant la seconde source 2 alimente des troisième et quatrième types de charges 10, 11. Un troisième interrupteur 6 permet de connecter la seconde source aux troisième et quatrième types de charges 10, 11. Le second interrupteur 5 permet de connecter deux portions de la ligne de distribution 7, 7b afin d'alimenter l'ensemble des charges quand une des sources est défaillante. Le procédé selon l'invention peut s'appliquer à n'importe quelle configuration de réseau de distribution d'énergie électrique dès lors que deux sources d'énergie doivent être commutées dans un temps court et reproductible, sans recouvrement des sources.

Pour éviter toute perturbation d'une source sur l'autre, le premier interrupteur 4 est ouvert avant la fermeture du second interrupteur 5 de manière à éviter toute circulation de courant, même fugitivement, entre la première source 1 et la seconde source 2. Ce séquencement permet un transfert de source appelé « sans recouvrement », c'est-à-dire que la première source et la deuxième source ne sont jamais connectées simultanément ensemble à la ligne de distribution 7. De plus, le procédé selon l'invention garantit une durée de transfert Tt prédéfinie, c'est-à-dire que les contacts de l'interrupteur 5 sont fermés après une durée de transfert Tt suivant l'ouverture des contacts du premier interrupteur 4. Ainsi, des moteurs connectés à la ligne de distribution 7 ne verront pas d'interruption de leur alimentation en énergie supérieure à la durée de transfert Tt. En optimisant cette durée de transfert, les moteurs subissent des perturbations minimales lors du transfert de source. En revanche, si la durée de transfert Tt ne peut être respectée alors les opérations de transfert de sources sont annulées. En effet, les conséquences d'un redémarrage différé de moteurs sont généralement moins critiques qu'un transfert de sources trop long.

Les opérations de transfert de sources doivent également durer le moins de temps possible pour que le transfert soit effectué avant que la source défaillante n'ait complètement disparu. Compte tenu de durée de manœuvre généralement longues, par exemple quand les interrupteurs sont des disjoncteurs de forte puissance, l'ouverture du premier interrupteur 4 est commandée parallèlement à une fermeture du second interrupteur 5. Pour cadencer efficacement les manœuvres en tenant compte des durées nécessaires aux différentes manœuvres et au respect de la durée de transfert Tt, le procédé comporte une étape préalable de mesure d'une moyenne des durées de manœuvre des interrupteurs. Une durée de manœuvre correspond au temps écoulé entre l'instant ou une commande est donnée et l'instant ou les contacts de l'interrupteur commandé sont dans l'état demandé par la commande. Une durée de manœuvre est de l'ordre de quelques dizaines de millisecondes pour les interrupteurs. Pour un même interrupteur, une durée de manœuvre d'ouverture des contacts électriques est différente d'une durée de manœuvre de fermeture desdits contacts électriques. Généralement, la durée de manœuvre d'ouverture est inférieure à la durée de manœuvre de fermeture. D'autre part, la durée d'une manœuvre donnée est soumise à une variabilité liée au fonctionnement mécanique de l'interrupteur exécutant ladite manœuvre. Pour limiter cette variabilité, le procédé de l'invention comporte une étape de calcul 100 d'une valeur moyenne d'une première durée de manœuvre Tmc1 pour connecter la première source à la ligne de distribution 7, d'une valeur moyenne d'une deuxième durée de manœuvre Tmc2 pour connecter la seconde source à la ligne de distribution 7, d'une valeur moyenne d'une troisième durée de manœuvre Tmd1 pour déconnecter la première source de la ligne de distribution 7, et d'une valeur moyenne d'une quatrième durée de manœuvre Tmd2 pour déconnecter la seconde source de la ligne de distribution 7. Le calcul d'une valeur moyenne d'une durée de manœuvre est effectué quand l'installation électrique est hors tension ou quand les charges 8, 9 ne sont pas connectées. Ladite manœuvre est répétée plusieurs fois afin d'obtenir plusieurs mesures. Un résultat de calcul d'une moyenne des mesures est mémorisé par le procédé pour être prise en compte dans la suite du procédé de connexion. Il est possible également d'utiliser la durée mesurée le plus fréquemment au cours de la série de manœuvres.

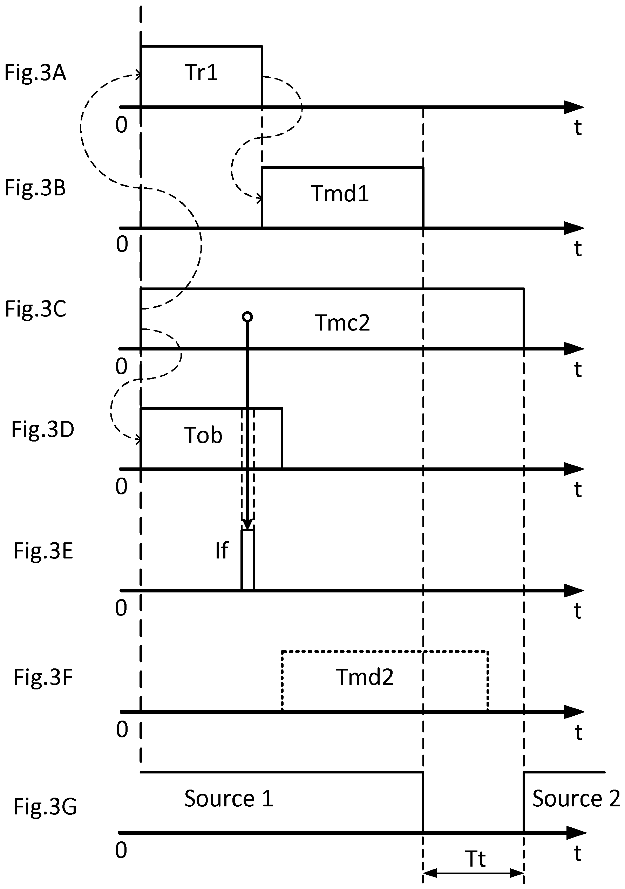

Les figures 3A à 3G représentent des chronogrammes de commande des interrupteurs dans un premier cas de transfert d'alimentation en fonctionnement nominal, c'est-à-dire sans défaut. La figure 3G est un chronogramme illustrant la présence de la première source 1 et sa disparition pendant une durée de transfert Tt puis l'apparition de la seconde source 2 d'alimentation. Dans cet exemple, et tels qu'illustré en figures 3B et 3C, la somme de la troisième durée de manœuvre Tmd1 pour déconnecter la première source 1, c'est-à-dire pour ouvrir le premier interrupteur 4, et de la durée de transfert Tt, est inférieure à la deuxième durée de manœuvre Tmc2 pour connecter la seconde source 2, c'est-à-dire pour fermer le second interrupteur 5. Dans ce cas, tel qu'illustré en figure 3A, une première temporisation Tr1, est appliquée avant la manœuvre pour déconnecter la première source 1, c'est-à-dire avant une commande du premier interrupteur 4. En parallèle, tel que représenté en figure 3C, la manœuvre pour connecter la seconde source 2, étant la plus longue, est commencée au temps t=0. Ainsi quand la troisième durée de manœuvre Tmd1 pour déconnecter la première source 1 est terminée, il s'écoule une durée de transfert Tt avant que la manœuvre pour connecter la seconde source 2 soit exécutée totalement. L'alimentation en énergie électrique de la ligne de distribution 7 a bien été transférée sans recouvrement de la première source 1 vers la seconde source 2. Les figures 3A, 3B, 3C et 3G montrent que :

$$Tr1 + Tmd1 + Tt = Tmc2$$

La troisième durée de manœuvre Tmd1 pour déconnecter la première source 1 est mesurée, la deuxième durée de manœuvre Tmc2 pour connecter la seconde source 2 est également mesurée, la durée de transfert Tt est choisie, il est donc simple de calculer la valeur de la première temporisation Tr1 :

$$Tr1 = Tmc2 - (Tmd1 + Tt)$$

Pour être appliquée, la première temporisation Tr1 doit être positive. Par conséquent il est nécessaire que :

$$Tmc2 - (Tmd1 + Tt) > 0$$

et donc

$$Tmc2 > (Tmd1 + Tt)$$

Evidemment, quand Tmc2 = (Tmd1 +Tt), la première temporisation Tr1 est nulle, et par conséquent la manœuvre pour déconnecter la première source 1 est lancée au même instant que la manœuvre pour connecter la seconde source 2.

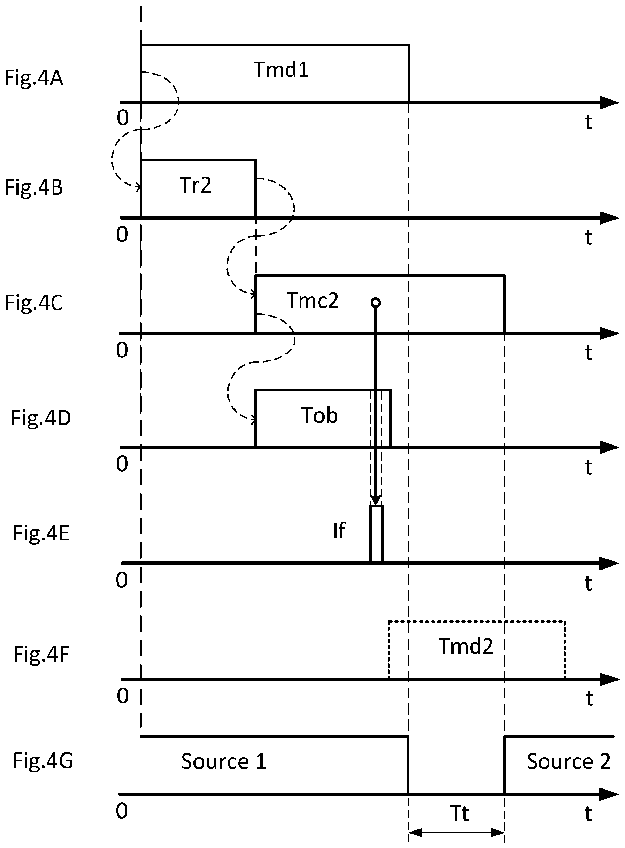

Un fonctionnement semblable est appliqué quand la deuxième durée de manœuvre Tmc2 pour connecter la seconde source 2 est inférieure à la somme de la troisième durée de manœuvre Tmd1 pour déconnecter la première source 1 et de la durée de transfert Tt. Dans ce cas, une seconde temporisation Tr2 est appliquée avant la manœuvre pour connecter la seconde source 2 par la fermeture du second interrupteur 5. Cette configuration est illustrée par les chronogrammes des figures 4A, 4B, 4C et 4G. Il apparait clairement que :

$$Tmd1 + Tt = Tr2 + Tmc2$$

d'où il est simple de déduire que : Tr2 = (Tmd1 +Tt) - Tmc2

Pour pouvoir être appliquée, la seconde temporisation Tr2 doit être positive et par conséquent:

$$(Tmd1 + Tt) > Tmc2$$

En synthèse, quand Tmc2 > (Tmd1 +Tt) alors la première temporisation Tr1 doit être appliquée avant le lancement de la manœuvre pour déconnecter la première source 1 ce qui correspond à l'ouverture du premier interrupteur 4. Quand Tmc2 < (Tmd1 +Tt) alors la seconde temporisation Tr2 doit être appliquée avant le lancement de la manœuvre pour connecter la seconde source 2 par la fermeture du second interrupteur 5. Ainsi, l'intervalle de temps entre la déconnexion de la première source 1, correspondant à l'ouverture du premier interrupteur 4, et la connexion de la seconde source 2, correspondant à la fermeture du second interrupteur 5, ledit intervalle de temps est égal à la durée de transfert Tt. Quand Tmc2 = (Tmd1 +Tt), aucune temporisation n'est appliquée, la manœuvre pour déconnecter la première source 1 est commandée simultanément avec la manœuvre pour connecter la seconde source 2.

La durée de transfert Tt choisie est préférentiellement comprise entre 10 millisecondes et 50 millisecondes.

Le procédé comporte une possibilité d'annulation du transfert de sources dans le cas où la durée de transfert ne peut être respectée. Il est effectivement important de ne pas connecter la deuxième source 2 si la durée de transfert est supérieure à la durée de transfert Tt prédéfinie. En effet, au-delà de ladite durée de transfert prédéfinie, l'écart de fréquence et de phase entre la deuxième source 2 et les bornes des moteurs 9 connectés à la ligne de distribution 7 peut devenir trop important et une connexion, dans ces conditions, des moteurs 9 à la deuxième source 2 risque de provoquer des surintensités dangereuses. Pour éviter cela, un indicateur de fermeture If du second interrupteur est surveillé. Cet indicateur est délivré par le second interrupteur 5 pour indiquer un état favorable à une fermeture. L'indicateur de fermeture If du second interrupteur 5 est délivré quand le mécanisme de fermeture des contacts du second interrupteur exécute un mouvement de fermeture. De préférence un contact auxiliaire de disjoncteur appelé « prêt à fermer», également désigné par l'acronyme « PF », est utilisé pour fournir l'indicateur de fermeture. Il est possible d'utiliser d'autres types de contacts auxiliaires pour fournir l'indicateur de fermeture :

- un contact auxiliaire de position de type « normalement fermé » également désigné par l'acronyme « NF » fournit un indicateur quand des contacts de l'interrupteur sont fermés, ou
- un contact auxiliaire de position « normalement ouvert » également désigné par l'acronyme « NO », fournit un indicateur dès que les contacts de l'interrupteur ne sont plus ouverts.

Le contact « prêt à fermer » délivre l'indicateur de fermeture If en avance par rapport aux autres types de contacts auxiliaires ce qui justifie une utilisation préférentielle.

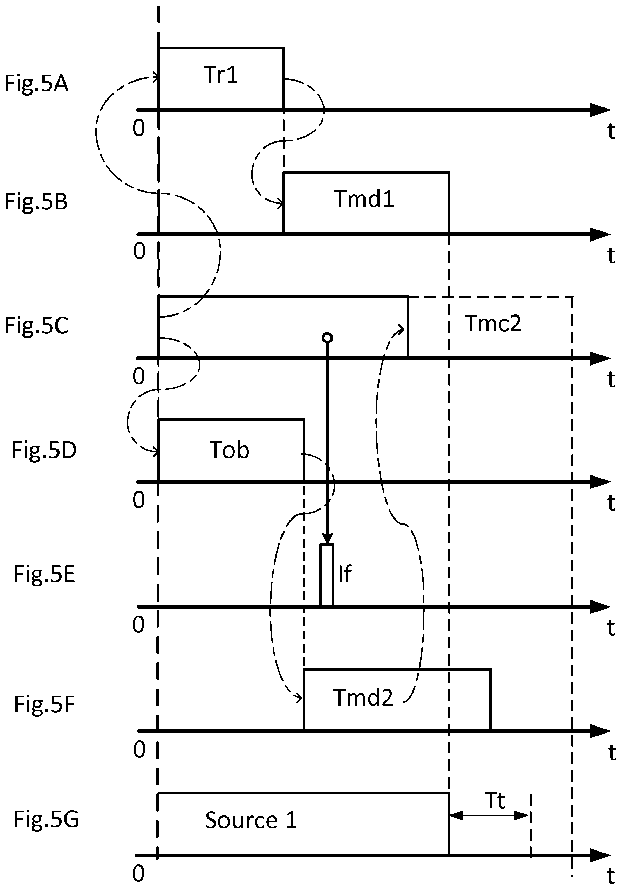

Dans un premier scénario, l'indicateur de fermeture If est délivré après une durée prédéfinie suivant une commande de fermeture du second interrupteur. Afin d'être certain de pouvoir respecter la durée de transfert Tt, une fenêtre d'observation est ouverte, pendant une durée d'observation Tob, parallèlement à une commande de fermeture du second interrupteur 5, ainsi que représenté sur les figures 3D et 4D. Quand l'indicateur de fermeture If est délivré pendant la durée d'observation Tob, la manœuvre de fermeture du second interrupteur peut se poursuivre. Quand l'indicateur de fermeture If du second interrupteur 5 n'est pas délivré pendant la durée Tob de la fenêtre temporelle d'observation, alors il y a probablement un problème de fermeture du second interrupteur 5 et une ouverture du second interrupteur 5 est commandée pour ne pas connecter la seconde source 2 en suivant un second scénario. L'installation et les moteurs 9 sont ainsi protégés des surintensités et des perturbations liées à une durée de transfert supérieure à la durée de transfert Tt prédéfinie. Le second scénario est illustré par les chronogrammes représentés en figures 5A à 5G, pour lesquels Tmc2 > (Tmd1 +Tt). La manœuvre pour connecter la seconde source 2 est commencée au temps t=0 ainsi que représenté en figure 5C. La fenêtre d'observation de durée Tob est ouverte simultanément avec la commande de fermeture du second interrupteur, ainsi que représenté en figure 5D. L'indicateur de fermeture If est délivré en dehors de la fenêtre d'observation. Le second interrupteur 5 a donc mis plus de temps que prévu pour exécuter la manœuvre de fermeture, il s'agit d'une situation anormale, il y a un défaut. Une manœuvre d'ouverture du second interrupteur 5 est exécutée, ainsi que représenté sur le chronogramme de la figure 5F, conduisant à un abandon de la manœuvre de fermeture du second interrupteur 5 ainsi que représenté en figure 5C. En conséquence, la première source 1 est déconnectée mais aucune autre source n'est connectée à la ligne de distribution 7 ainsi que représenté en figure 5G. Le procédé fonctionne de manière identique quand l'indicateur de fermeture If n'est pas délivré.

Le premier scénario est illustré par les chronogrammes représentés en figures 4A à 4G, pour lesquels Tmc2 < (Tmd1 +Tt). La seconde temporisation Tr2 est lancée avant la manœuvre pour connecter la seconde source 2 ainsi que représenté en figure 4B et 4C, et, de la même façon que pour le second scénario, la fenêtre d'observation de durée Tob est ouverte simultanément avec la commande de fermeture du second interrupteur, ainsi que représenté en figure 4D. L'indicateur de fermeture If est délivré pendant la durée Tob d'ouverture de la fenêtre d'observation, ainsi que représenté en figure 4D et 4E, la manœuvre de fermeture du second interrupteur peut se poursuivre, ainsi que représenté en figure 4C. Le chronogramme en figure 4G illustre la déconnexion de la première source 1 puis la période de transfert de source suivie par la connexion de la seconde source 2. Le chronogramme en figure 4F illustre que l'annulation de la connexion de la seconde source 2 n'a pas été effectuée.

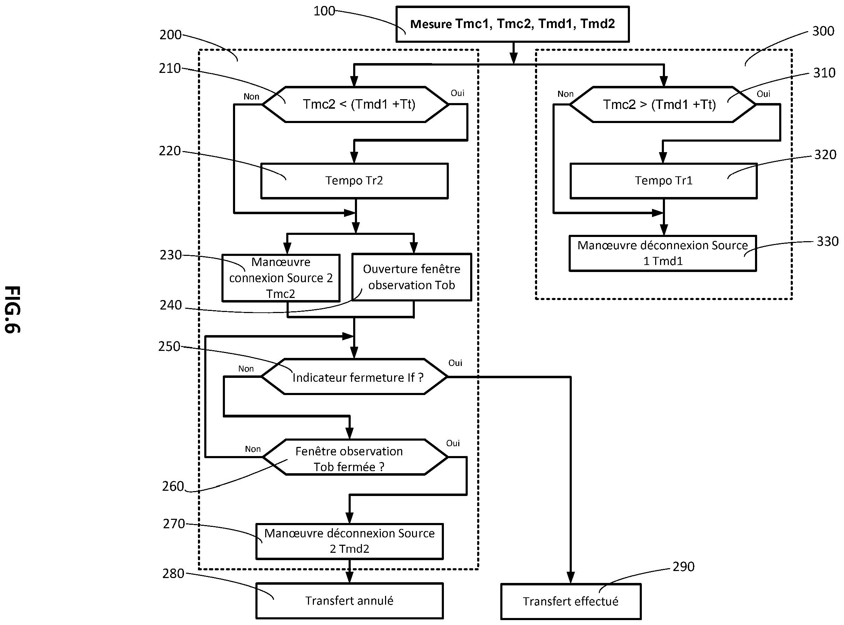

Le procédé pour transférer l'alimentation en énergie électrique d'une ligne de distribution électrique 7, de la première source 1 à la seconde source 2, sans recouvrement, est représenté sous forme d'un organigramme en figure 6. Le procédé comporte l'étape de mesure 100 des durées de manœuvre Tmc1, Tmc2, Tmd1, Tmd2, pour connecter et déconnecter la première et la seconde source. Cette étape de mesure 100 est réalisée à la mise en service de l'installation électrique et peut être réalisée périodiquement pour actualiser les mesures et prendre en compte l'usure des équipements. Le procédé se poursuit par deux phases initialisées simultanément et se déroulant parallèlement. Une première phase 200 de connexion de la seconde source 2 à la ligne de distribution 7 ce qui correspond à la manœuvre de fermeture du second interrupteur 5, ladite première phase étant menée parallèlement avec une seconde phase 300 de déconnexion de la première source 3 de la ligne de distribution 7 ce qui correspond à la manœuvre d'ouverture du premier interrupteur 4.

La première phase 200 de connexion de la seconde source 2 commence par une étape 210 de test si Tmc2 est inférieur à la somme (Tmd1+Tt). Si c'est le cas, la manœuvre de connexion de la seconde source 2 est plus rapide que la manœuvre de déconnexion de la première source 1 à laquelle est ajouté le temps de transfert Tt, alors le procédé passe à l'étape 220 de temporisation pendant la durée Tr2 égale à (Tmd1 +Tt) - Tmc2. Si ce n'est pas le cas, le procédé se poursuit par l'étape 230 correspondant au lancement de la manœuvre de connexion de la seconde source 2 et l'étape 240, exécutées parallèlement à l'étape 230, correspondant à l'ouverture de la fenêtre d'observation. Au cours des étapes 250 et 260, le procédé surveille si l'indicateur de fermeture If est délivré pendant la durée Tob d'ouverture de la fenêtre d'observation. Si c'est le cas, le procédé se termine par une étape 290 correspondant à un transfert de source effectué correctement. Si l'indicateur de fermeture If n'a pas été délivré pendant la durée Tob d'ouverture de la fenêtre d'observation, le procédé commande une manœuvre de déconnexion de la seconde source 2 au cours d'une étape 270 et le procédé se termine par une étape 280 correspondant à un transfert de sources annulé.

La seconde phase 300 de déconnexion de la première source 3 de la ligne de distribution 7 commence par une étape 310 pour tester si Tmc2 est supérieur à la somme (Tmd1+Tt). Si c'est le cas, le procédé passe à l'étape 320 de temporisation pendant la durée Tr1 égale à Tmc2 - (Tmd1+Tt) puis passe à l'étape 330 à la fin de la temporisation Tr1. Si ce n'est pas le cas, le procédé se poursuit directement par l'étape 330 correspondant au lancement de la manœuvre de déconnexion de la première source 1.

Dans le cas où Tmc2 = (Tmd1 +Tt), la première phase 200 de connexion de la seconde source 2 se déroule sans passage à l'étape 220 de temporisation pendant la durée Tr2 et la seconde phase 300 se déroule parallèlement sans passage à l'étape 320 de temporisation pendant la durée Tr1.

Le procédé faisant l'objet de l'invention permet donc de transférer l'alimentation en énergie électrique d'une ligne de distribution électrique 7, d'une première source 1 vers une seconde source 2, pendant la durée de transfert Tt prédéfinie et maîtrisée, indépendante du temps nécessaire au fonctionnement des interrupteurs. Dans le cas où la durée de transfert Tt ne peut être respectée, alors la commutation de sources est annulée. Bien évidemment, le procédé décrit précédemment peut être transposé pour transférer l'alimentation en énergie électrique de la ligne de distribution électrique de la seconde source vers la première source, ou encore pour transférer l'alimentation en énergie électrique entre deux portions de ligne de distribution 7, 7b tel que représenté en figure 2, ou toute autre configuration de réseau électrique.

Une procédure de vérification de l'ouverture du premier interrupteur 4 pourrait être effectuée au cours de ladite manœuvre de déconnexion. Cependant, si la première source 1 ne se déconnecte pas, le transfert de source s'effectue avec recouvrement. La première source et la seconde source étant synchronisées, les perturbations supportées par les charges connectée sur la ligne d'alimentation seront limitées. Cependant une protection doit être mise en place pour limiter l'influence mutuelle des deux sources.

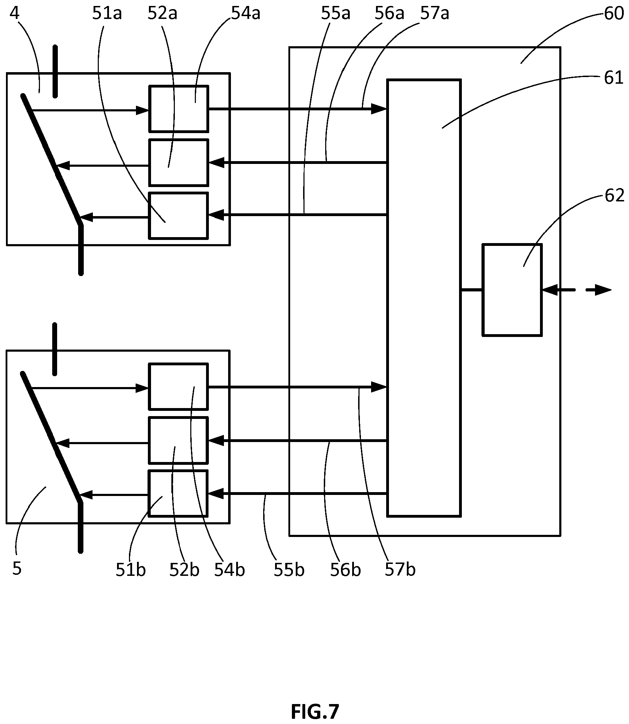

L'invention concerne également un inverseur de sources 60 destiné à commander au moins un premier interrupteur 4 et un second interrupteur 5 pour connecter, sans recouvrement, au moins deux sources d'énergie électrique 1, 2 à une ligne de distribution de l'énergie 7. La figure 7 représente un schéma bloc d'un tel inverseur de sources. Ledit inverseur comporte :

- au moins une première liaison 57a connectée à un premier capteur 54a pour recevoir un premier signal indicateur de fermeture If du premier interrupteur 4 et une deuxième liaison 57b pour recevoir un second signal indicateur de fermeture Ifb du second interrupteur 5,
- au moins une troisième liaison 56a pour commander un premier actionneur d'ouverture 52a du premier interrupteur 4 et une quatrième liaison 56b pour commander un second actionneur d'ouverture 52b du second interrupteur 5,
- au moins une cinquième liaison 55a pour commander un premier actionneur de fermeture 51a du premier interrupteur 4 et une sixième liaison 55b pour commander un second actionneur de fermeture 51b du second interrupteur 5, et
- une unité de traitement 61 pour la mise en œuvre du procédé de connexion tel que décrit précédemment.

L'inverseur de sources 60 peut comporter en option une interface homme-machine 62 destinée à fournir des données par exemple sur l'état des interrupteurs, effectuer des mesures de valeurs moyenne de durée de manœuvre ou permettre à un opérateur d'initialiser le procédé de transfert de source.

Une commande pour activer un actionneur au moyen d'une tension alternative introduit un retard aléatoire lié à l'angle de phase de la tension alternative au moment de la commande. Un tel retard, inclus dans la durée de manœuvre pour connecter ou déconnecter la première ou la seconde source, introduirait une variabilité non souhaitée aux première, deuxième, troisième et quatrième durées de manœuvre Tmd1, Tmd2, Tmc1, Tmc2. Une activation par une tension continue élimine cette variabilité. Préférentiellement, le premier actionneur d'ouverture 52a du premier interrupteur 4, le second actionneur d'ouverture 52b du second interrupteur 5, le premier actionneur de fermeture 51a du premier interrupteur 4 et le second actionneur de fermeture 51b du second interrupteur 5 sont activés par une tension continue. L'inverseur de source 60 émet une tension continue sur la cinquième liaisons 55a pour commander le premier actionneur de fermeture 51a du premier interrupteurs 4, l'inverseur de source 60 émet une tension continue sur la sixième liaisons 55b pour commander le second actionneur de fermeture 51b du second interrupteurs 5. L'inverseur de source 60 émet aussi une tension continue sur la troisième liaison 56a pour commander le premier actionneur d'ouverture 52a du premier interrupteur 4, et l'inverseur de source 60 émet également une tension continue sur la quatrième liaison 56b pour commander le second actionneur d'ouverture 52b du second interrupteurs 5.

Le premier interrupteur électrique 4 étant destiné à être commandé par l'inverseur de source 60 comporte au moins :

- au moins une borne de raccordement amont 12 destinée à être connectée à une première source 4 ou à une ligne de transport d'énergie électrique,
- au moins une borne de raccordement aval 13 destinée à être connectée à une ligne de distribution d'énergie électrique 7,
- des contacts électriques 41 pour établir ou interrompre la circulation d'énergie entre au moins la borne amont 12 et la borne aval 13,
- un actionneur d'ouverture 52a pour actionner un mécanisme d'ouverture 42 des contacts électriques 41,
- un actionneur de fermeture 51a pour actionner un mécanisme de fermeture 46 des contacts électriques 41.

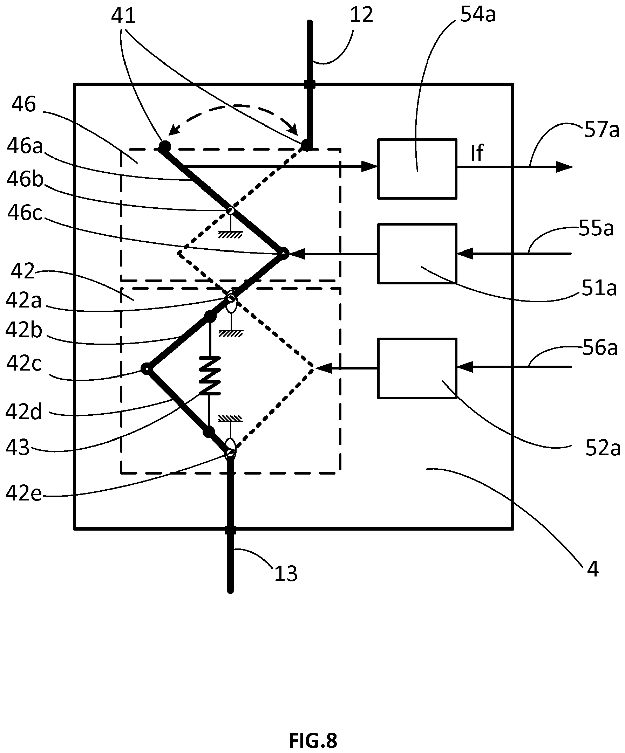

La figure 8 représente un tel interrupteur électrique sous forme d'un synoptique illustrant l'agencement particulier des mécanismes d'ouverture 42 et de fermeture 46 des contacts électriques : l'actionnement du mécanisme d'ouverture 42 des contacts électriques agit sur le mécanisme de fermeture 46 des contacts pour interrompre un mouvement de fermeture desdits contacts. Cette particularité permet d'exécuter l'étape 270 de manœuvre de déconnexion de la seconde source 2, étant donné que l'indicateur de fermeture If n'a pas été délivré pendant la durée Tob d'ouverture de la fenêtre d'observation, alors qu'une manœuvre de connexion à la seconde source 2 avait été engagée précédemment à l'étape 230.

Le mécanisme d'ouverture 42 fonctionne selon le principe d'une première genouillère : il comporte une première pièce 42b mobile autour d'un premier axe 42a pouvant se déplacer dans un premier gousset. Une première extrémité de ladite première pièce 42b porte une première articulation 42c avec une deuxième pièce mobile 42d autour d'un deuxième axe 42$^e$ pouvant se déplacer dans un second gousset. Le mécanisme de fermeture 46 fonctionne selon le principe d'une seconde genouillère : une troisième pièce 46a mobile autour d'un troisième axe 46b porte des contacts électriques 41 à une de ses extrémités, l'autre extrémité portant une deuxième articulation 46c avec la première pièce 42b. Le premier actionneur de fermeture 51a agit sur la troisième pièce au niveau de la deuxième articulation 46c dans le sens indiqué par la flèche pour obtenir la fermeture des contacts électriques 41. Le premier actionneur d'ouverture 52a agit sur la première pièce mobile et la deuxième pièce mobile au niveau de la première articulation 42c. Une activation du premier actionneur d'ouverture 52a provoque une rotation de la troisième pièce 46a dans le sens de l'ouverture des contacts 41. Un ressort 43 maintient la première et la seconde genouillère en position stable en l'absence de commande d'ouverture ou de fermeture des contacts. L'agencement astucieux de la première et de la seconde genouillère permet ainsi d'annuler une manœuvre de fermeture des contacts 41 quand une manœuvre de déconnexion de la seconde source 2 est commandée au cours d'une étape 270. Le mécanisme d'ouverture 42 et le mécanisme de fermeture 46 décrits précédemment sont des modes de réalisation préférentiels cependant d'autres principes mécaniques permettant une annulation de fermeture des contacts 41 par une commande d'ouverture peuvent être employés.

Le procédé de transfert d'énergie et l'inverseur de sources faisant l'objet de l'invention peuvent être utilisés sur des réseaux comportant des sources monophasées ou triphasées, sans limitation liée à la fréquence des sources ni à la puissance des charges à alimenter. Le procédé de transfert d'énergie et l'inverseur de sources faisant l'objet de l'invention sont plus particulièrement adaptés pour transférer l'alimentation en énergie électrique d'une ligne de distribution électrique sur laquelle sont connectés des moteurs, d'une première source à une seconde source, sans recouvrement d'une source sur l'autre et en garantissant une durée de transfert brève et maîtrisée. Des interrupteurs conventionnels tels que des disjoncteurs de puissance peuvent être employés, sans nécessiter de propriétés particulières de rapidité de manœuvre. Dans ces conditions, l'inverseur de sources est réalisé avec des produits standards, économiquement avantageux, pour lesquels la disponibilité des pièces de maintenance est assurée. Ces avantages favorisent une utilisation industrielle en grande série d'un tel inverseur de sources.

## Revendications

1. Procédé pour transférer, pendant une durée de transfert (Tt) prédéfinie, l'alimentation en énergie électrique d'une ligne de distribution électrique (7), d'une première source (1) à une seconde source (2), sans recouvrement des deux sources, un premier interrupteur (4), relié d'une part à la première source (1) et d'autre part à la ligne de distribution (7), étant commandé pour se fermer ou s'ouvrir afin de connecter ou déconnecter la première source (1) à la ligne de distribution (7), un second interrupteur (5), relié d'une part à la seconde source (2) et d'autre part à la ligne de distribution (7), étant commandé pour se fermer ou s'ouvrir afin de connecter ou déconnecter la seconde source (2) à ladite ligne de distribution (7), procédé **caractérisé en ce que** :

   - soit une première temporisation (Tr1) est appliquée avant une commande d'ouverture du premier interrupteur (4) quand une deuxième durée de manœuvre (Tmc2) pour connecter la seconde source (2) est supérieure à la somme d'une troisième durée de manœuvre (Tmd1) pour déconnecter la première source et de la durée de transfert (Tt),
   - soit une seconde temporisation (Tr2) est appliquée avant une commande de fermeture du second interrupteur (5) quand la deuxième durée de manœuvre (Tmc2) pour connecter la seconde source est inférieure à la somme de la troisième durée de manœuvre (Tmd1) pour déconnecter la première source (1) et de la durée de transfert (Tt),

   la première temporisation (Tr1) ou la seconde temporisation (Tr2) étant calculées pour que l'intervalle de temps entre une déconnexion de la première source (1) et une connexion de la seconde source (2) soit égal à la durée de transfert (Tt).

2. Procédé selon la revendication 1 **caractérisé en ce qu'**il comporte une étape de calcul :

   - d'une valeur moyenne d'une première durée de manœuvre (Tmc1) pour connecter la première source (1) à la ligne de distribution (7),
   - d'une valeur moyenne de la deuxième durée de manœuvre (Tmc2) pour connecter la seconde source (2) à la ligne de distribution (7),
   - d'une valeur moyenne de la troisième durée de manœuvre (Tmd1) pour déconnecter la première source (1) de la ligne de distribution (7), et
   - d'une valeur moyenne d'une quatrième durée de manœuvre (Tmd2) pour déconnecter la seconde source (2) de la ligne de distribution (7).

3. Procédé selon l'une des revendications précédentes **caractérisé en ce que** la première temporisation (Tr1) est égale à la deuxième durée de manœuvre (Tmc2) pour connecter la seconde source (2) moins la somme de la troisième durée de manœuvre (Tmd1) pour déconnecter la première source (4) et de la durée de transfert (Tt).

4. Procédé selon l'une des revendications précédentes caractérisé en ce la seconde temporisation (Tr2) est égale à la somme de la troisième durée de manœuvre (Tmd1) pour déconnecter la première source et de la durée de transfert (Tt) moins la deuxième durée de la manœuvre (Tmc2) pour connecter la seconde source.

5. Procédé selon l'une quelconque des revendications précédentes **caractérisé en ce que** la durée de transfert (Tt) est comprise entre 10 ms et 50 ms.

6. Procédé selon l'une quelconque des revendications précédentes **caractérisé en ce qu'**une fenêtre d'observation d'une durée d'observation (Tob) prédéfinie est ouverte simultanément avec la commande de fermeture du second interrupteur (5).

7. Procédé selon la revendication précédente **caractérisé en ce qu'**une ouverture du second interrupteur (5) est commandée quand un indicateur de fermeture (If) du second interrupteur (5) n'est pas délivré pendant la durée d'observation (Tob).

8. Procédé selon la revendication précédente **caractérisé en ce que** l'indicateur de fermeture (If) du second interrupteur (5) est délivré pendant une exécution d'un mouvement de fermeture des contacts dudit second interrupteur (5).

9. Procédé selon la revendication 7 **caractérisé en ce que** l'indicateur de fermeture du second interrupteur (5) est délivré quand des contacts dudit second interrupteur (5) sont fermés.

10. Procédé selon la revendication 7 **caractérisé en ce que** l'indicateur de fermeture du second interrupteur est délivré quand des contacts dudit second interrupteur (5) ne sont plus ouverts.

11. Inverseur de sources (60) destiné à commander au moins un premier interrupteur (4) et un second interrupteur (5) pour transférer, sans recouvrement, l'alimentation en énergie électrique d'une ligne de distribution de l'énergie (7) d'une première source (1) à une seconde source (2),

le premier interrupteur (4) comportant au moins :

- un premier actionneur de fermeture (51a) pour commander une manœuvre de fermeture du premier interrupteur (4),
- un premier actionneur d'ouverture (52a) pour commander une manœuvre d'ouverture du premier interrupteur (4), et
- un premier capteur (54a) pour fournir un premier signal (If) indicateur de fermeture du premier interrupteur (4),

le second interrupteur (5) comportant au moins :

- un second actionneur de fermeture (51b) pour commander une manœuvre de fermeture du second interrupteur (5),
- un second actionneur d'ouverture (52b) pour commander une manœuvre d'ouverture du second interrupteur (5), et
- un second capteur (54b) pour fournir un second signal (Ifb) indicateur de fermeture du second interrupteur (5),

inverseur de source **caractérisé en ce qu'**il comporte :

- au moins une première liaison (57a) connectée au premier capteur (54a) pour recevoir un premier signal indicateur de fermeture (If) du premier interrupteur (4) et une deuxième liaison (57b) pour recevoir un second signal indicateur de fermeture (Ifb) du second interrupteur (5),
- au moins une troisième liaison (56a) pour commander le premier actionneur d'ouverture (52a) et une quatrième liaison (56b) pour commander le second actionneur d'ouverture (52b),
- au moins une cinquième liaison (55a) pour commander le premier actionneur de fermeture (51a) et une sixième liaison (55b) pour commander le second actionneur de fermeture (51b), et
- une unité de traitement pour la mise en œuvre du procédé de connexion selon les revendications 1 à 10.

12. Inverseur de sources (60) selon la revendication précédente **caractérisé en ce que** les premier et second actionneurs de fermeture (51a, 51b) des premier et second interrupteurs (4,5) sont activés par une tension continue et que l'inverseur de source (60) émet une tension continue sur les cinquième et sixième liaisons (55a, 55b) pour commander respectivement les premier et second actionneurs de fermeture (51a, 51b) du premier et du second interrupteur (4,5).

13. Inverseur de sources (60) selon l'une des revendications 11 ou 12 **caractérisé en ce que** les premier et second actionneurs d'ouverture (52a, 52b) des premier et second interrupteurs (4,5) sont activés par une tension continue et l'inverseur de source (60) émet une tension continue sur les troisième et quatrième liaisons (56a, 56b) pour commander respectivement les premier et second actionneurs d'ouverture (52a, 52b) du premier et du second interrupteur (4, 5).

14. Interrupteur électrique (4), destiné à être commandé par un inverseur de source (60) selon l'une quelconque des revendications 11 à 13, ledit interrupteur comportant au moins :

- au moins une borne de raccordement amont (12) destinée à être connectée à une source (1, 2) fournissant une énergie électrique,
- au moins une borne de raccordement aval (13) destinée à être connectée à une ligne de distribution d'énergie électrique (7),
- des contacts électriques (41) pour établir ou interrompre la circulation d'énergie entre au moins la borne amont (12) et la borne aval (13),
- un actionneur d'ouverture (51a) pour actionner un mécanisme d'ouverture (42) des contacts électriques (41),
- un actionneur de fermeture (51a) pour actionner un mécanisme de fermeture (46) des contacts électriques (41),

ledit interrupteur (4) étant **caractérisé en ce que** l'actionnement du mécanisme d'ouverture (42) des contacts électriques (41) agit sur le mécanisme de fermeture (46) des contacts pour interrompre un mouvement de fermeture desdits contacts (41).

**Patentansprüche**

1. Verfahren zum Umschalten, während einer vordefinierten Umschaltdauer (Tt), der Versorgung einer Stromverteilungsleitung (7) mit elektrischer Energie von einer ersten Quelle (1) zu einer zweiten Quelle (2) ohne Überlappung der zwei Quellen, wobei ein erster Schalter (4), der einerseits mit der ersten Quelle (1) und andererseits mit der Verteilungsleitung (7) verbunden ist, so gesteuert wird, dass er sich schließt oder öffnet, um die erste Quelle (1) mit der Verteilungsleitung (7) zu verbinden oder von ihr zu trennen, wobei ein zweiter Schalter (5), der einerseits mit der zweiten Quelle (2) und andererseits mit der Verteilungsleitung (7) verbunden ist, so gesteuert wird, dass er sich schließt oder öffnet, um die zweite Quelle (2) mit der Verteilungsleitung (7) zu verbinden oder von ihr zu trennen, wobei das Verfahren **dadurch gekennzeichnet ist, dass**:

- entweder eine erste Verzögerung (Tr1) vor einer Öffnungssteuerung des ersten Schalters (4) angewendet wird, wenn eine zweite Betätigungsdauer (Tmc2) zum Verbinden der zweiten Quelle (2) größer als die Summe einer dritten Betätigungsdauer (Tmd1) zum Trennen der ersten Quelle und der Umschaltdauer (Tt) ist,
- oder eine zweite Verzögerung (Tr2) vor einer Schließsteuerung des zweiten Schalters (5) angewendet wird, wenn die zweite Betätigungsdauer (Tmc2) zum Verbinden der zweiten Quelle kleiner als Summe der dritten Betätigungsdauer (Tmd1) zum Trennen der ersten Quelle (1) und der Umschaltdauer (Tt) ist,

wobei die erste Verzögerung (Tr1) oder die zweite Verzögerung (Tr2) so berechnet wird, dass das Zeitintervall zwischen einer Trennung der ersten Quelle (1) und einer Verbindung der zweiten Quelle (2) gleich der Umschaltdauer (Tt) ist.

2. Verfahren nach Anspruch 1, **dadurch gekennzeichnet, dass** es einen Schritt der Berechnung umfasst:

- eines Mittelwertes einer ersten Betätigungsdauer (Tmc1) zum Verbinden der ersten Quelle (1) mit der Verteilungsleitung (7),
- eines Mittelwertes der zweiten Betätigungsdauer (Tmc2) zum Verbinden der zweiten Quelle (2) mit der Verteilungsleitung (7),
- eines Mittelwertes der dritten Betätigungsdauer (Tmd1) zum Trennen der ersten Quelle (1) von der Verteilungsleitung (7), und
- eines Mittelwertes einer vierten Betätigungsdauer (Tmd2) zum Trennen der zweiten Quelle (2) von der Verteilungsleitung (7).

3. Verfahren nach einem der vorhergehenden Ansprüche, **dadurch gekennzeichnet, dass** die erste Verzögerung (Tr1) gleich der zweiten Betätigungsdauer (Tmc2) zum Verbinden der zweiten Quelle (2) abzüglich der Summe der dritten Betätigungsdauer (Tmd1) zum Trennen der ersten Quelle (4) und der Umschaltdauer (Tt) ist.

4. Verfahren nach einem der vorhergehenden Ansprüche, **dadurch gekennzeichnet, dass** die zweite Verzögerung (Tr2) gleich der Summe der dritten Betätigungsdauer (Tmd1) zum Trennen der ersten Quelle und der Umschaltdauer (Tt) abzüglich der zweiten Betätigungsdauer (Tmc2) zum Verbinden der zweiten Quelle ist.

5. Verfahren nach einem der vorhergehenden Ansprüche, **dadurch gekennzeichnet, dass** die Umschaltdauer (Tt) zwischen 10 ms und 50 ms liegt.

6. Verfahren nach einem der vorhergehenden Ansprüche, **dadurch gekennzeichnet, dass** ein Beobachtungsfenster mit einer vordefinierten Beobachtungsdauer (Tob) gleichzeitig mit der Schließsteuerung des zweiten Schalters (5) geöffnet ist.

7. Verfahren nach dem vorhergehenden Anspruch, **dadurch gekennzeichnet, dass** ein Öffnen des zweiten Schalters (5) gesteuert wird, wenn ein Schließanzeiger (If) des zweiten Schalters (5) nicht während der Beobachtungsdauer (Tob) geliefert wird.

8. Verfahren nach dem vorhergehenden Anspruch, **dadurch gekennzeichnet, dass** der Schließanzeiger (If) des zweiten Schalters (5) während einer Ausführung einer Schließbewegung der Kontakte des zweiten Schalters (5) geliefert wird.

9. Verfahren nach Anspruch 7, **dadurch gekennzeichnet, dass** der Schließanzeiger des zweiten Schalters (5) geliefert wird, wenn Kontakte des zweiten Schalters (5) geschlossen sind.

10. Verfahren nach Anspruch 7, **dadurch gekennzeichnet, dass** der Schließanzeiger des zweiten Schalters geliefert wird, wenn Kontakte des zweiten Schalters (5) nicht mehr geöffnet sind.

11. Quellenumschalter (60), welcher dazu bestimmt ist, einen ersten Schalter (4) und einen zweiten Schalter (5) zu steuern, um die Versorgung einer Stromverteilungsleitung (7) mit elektrischer Energie von einer ersten Quelle (1) zu einer zweiten Quelle (2) ohne Überlappung umzuschalten,
wobei der erste Schalter (4) wenigstens umfasst:

   - einen ersten Schließaktuator (51a) zum Steuern einer Schließbetätigung des ersten Schalters (4),
   - einen ersten Öffnungsaktuator (52a) zum Steuern einer Öffnungsbetätigung des ersten Schalters (4), und
   - einen ersten Sensor (54a) zum Liefern eines ersten Signals (If) zur Schließanzeige des ersten Schalters (4),

wobei der zweite Schalter (5) wenigstens umfasst:

   - einen zweiten Schließaktuator (51b) zum Steuern einer Schließbetätigung des zweiten Schalters (5),
   - einen zweiten Öffnungsaktuator (52b) zum Steuern einer Öffnungsbetätigung des zweiten Schalters (5), und
   - einen zweiten Sensor (54b) zum Liefern eines zweiten Signals (Ifb) zur Schließanzeige des zweiten Schalters (5),

wobei der Quellenumschalter **dadurch gekenn-**

**zeichnet ist, dass** er umfasst:

   - wenigstens eine erste Verbindung (57a), die mit dem ersten Sensor (54a) verbunden ist, zum Empfangen eines ersten Signals zur Schließanzeige (If) des ersten Schalters (4) und eine zweite Verbindung (57b) zum Empfangen eines zweiten Signals zur Schließanzeige (Ifb) des zweiten Schalters (5),
   - wenigstens eine dritte Verbindung (56a) zum Steuern des ersten Öffnungsaktuators (52a) und eine vierte Verbindung (56b) zum Steuern des zweiten Öffnungsaktuators (52b),
   - wenigstens eine fünfte Verbindung (55a) zum Steuern des ersten Schließaktuators (51a) und eine sechste Verbindung (55b) zum Steuern des zweiten Schließaktuators (51b), und
   - eine Verarbeitungseinheit zur Durchführung des Verfahrens zum Anschluss nach den Ansprüchen 1 bis 10.

12. Quellenumschalter (60) nach dem vorhergehenden Anspruch, **dadurch gekennzeichnet, dass** der erste und der zweite Schließaktuator (51a, 51b) des ersten und des zweiten Schalters (4, 5) durch eine Gleichspannung aktiviert werden, und dass der Quellenumschalter (60) eine Gleichspannung auf der fünften und sechsten Verbindung (55a, 55b) abgibt, um den ersten bzw. zweiten Schließaktuator (51a, 51b) des ersten bzw. des zweiten Schalters (4, 5) zu steuern.

13. Quellenumschalter (60) nach einem der Ansprüche 11 oder 12, **dadurch gekennzeichnet, dass** der erste und der zweite Öffnungsaktuator (52a, 52b) des ersten und des zweiten Schalters (4, 5) durch eine Gleichspannung aktiviert werden und der Quellenumschalter (60) eine Gleichspannung auf der dritten und vierten Verbindung (56a, 56b) abgibt, um den ersten bzw. zweiten Öffnungsaktuator (52a, 52b) des ersten bzw. des zweiten Schalters (4, 5) zu steuern.

14. Elektrischer Schalter (4), welcher dazu bestimmt ist, von einem Quellenumschalter (60) nach einem der Ansprüche 11 bis 13 gesteuert zu werden, wobei der Schalter wenigstens umfasst:

   - wenigstens eine vorgeschaltete Anschlussklemme (12), die dazu bestimmt ist, mit einer Quelle (1, 2) verbunden zu werden, die eine elektrische Energie liefert,
   - wenigstens eine nachgeschaltete Anschlussklemme (13), die dazu bestimmt ist, mit einer Verteilungsleitung für elektrische Energie (7) verbunden zu werden,
   - elektrische Kontakte (41), um den Energiefluss zwischen mindestens der vorgeschalteten Klemme (12) und der nachgeschalteten Klemme (13) herzustellen oder zu unterbrechen,
- einen Öffnungsaktuator (51a) zum Betätigen eines Öffnungsmechanismus (42) der elektrischen Kontakte (41),
- einen Schließaktuator (51a) um Betätigen eines Schließmechanismus (46) der elektrischen Kontakte (41),

wobei der Schalter (4) **dadurch gekennzeichnet ist, dass** die Betätigung des Öffnungsmechanismus (42) der elektrischen Kontakte (41) auf den Schließmechanismus (46) der Kontakte einwirkt, um eine Schließbewegung der Kontakte (41) zu unterbrechen.

**Claims**

1. Method for transferring, in a predefined transfer time (Tt), the electrical power supply of an electrical distribution line (7), from a first source (1) to a second source (2), without overlap of the two sources, a first switch (4), connected on the one hand to the first source (1) and on the other hand to the distribution line (7), being commanded to close or to open in order to connect or disconnect the first source (1) to or from the distribution line (7), a second switch (5), connected on the one hand to the second source (2) and on the other hand to the distribution line (7), being commanded to open or to close in order to connect or disconnect the second source (2) to or from said distribution line (7), this method being **characterized in that**:

   - either a first delay (Tr1) is applied before a command to open the first switch (4) when a second manoeuvre time (Tmc2) taken to connect the second source (2) is longer than the sum of a third manoeuvre time (Tmd1) taken to disconnect the first source and of the transfer time (Tt),
   - or a second delay (Tr2) is applied before a command to close the second switch (5) when the second manoeuvre time (Tmc2) taken to connect the second source is shorter than the sum of the third manoeuvre time (Tmd1) taken to disconnect the first source (1) and of the transfer time (Tt),

   the first delay (Tr1) or second delay (Tr2) being computed so that the time interval between a disconnection of the first source (1) and a connection of the second source (2) is equal to the transfer time (Tt).

2. Method according to Claim 1, **characterized in that** it comprises a step of computing:

   - an average value of a first manoeuvre time (Tmc1) taken to connect the first source (1) to the distribution line (7),
   - an average value of the second manoeuvre time (Tmc2) taken to connect the second source (2) to the distribution line (7),
   - an average value of the third manoeuvre time (Tmd1) taken to disconnect the first source (1) from the distribution line (7),
   - an average value of a fourth manoeuvre time (Tmd2) taken to disconnect the second source (2) from the distribution line (7),

3. Method according to one of the preceding claims, **characterized in that** the first delay (Tr1) is equal to the second manoeuvre time (Tmc2) taken to connect the second source (2) minus the sum of the third manoeuvre time (Tmd1) taken to disconnect the first source (4) and of the transfer time (Tt).

4. Method according to one of the preceding claims, **characterized in that** the second delay (Tr2) is equal to the sum of the third manoeuvre time (Tmd1) taken to disconnect the first source and of the transfer time (Tt) minus the second manoeuvre time (Tmc2) taken to connect the second source.

5. Method according to any one of the preceding claims, **characterized in that** the transfer time (Tt) is comprised between 10 ms and 50 ms.

6. Method according to any one of the preceding claims, **characterized in that** an observation window of a predefined observation time (Tob) is opened simultaneously with the command to close the second switch (5).

7. Method according to the preceding claim, **characterized in that** the second switch (5) is commanded to open when an indicator of closure (If) of the second switch (5) is not delivered during the observation time (Tob).

8. Method according to the preceding claim, **characterized in that** the indicator of closure (If) of the second switch (5) is delivered during an execution of a movement of closure of the contacts of said second switch (5).

9. Method according to Claim 7, **characterized in that** the indicator of closure of the second switch (5) is delivered when the contacts of said second switch (5) are closed.

10. Method according to Claim 7, **characterized in that** the indicator of closure of the second switch is delivered when contacts of said second switch (5) are no longer open.

**11.** Source inverter (60) intended to command at least a first switch (4) and a second switch (5) with a view to transferring, without overlap, the electrical power supply of a power distribution line (7) from a first source (1) to a second source (2), the first switch (4) comprising at least:

- a first closing actuator (51a) for commanding a closing manoeuvre of the first switch (4),
- a first opening actuator (52a) for commanding an opening manoeuvre of the first switch (4), and
- a first sensor (54a) for delivering a first signal (If) indicator of closure of the first switch (4),

the second switch (5) comprising at least:

- a second closing actuator (51b) for commanding a closing manoeuvre of the second switch (5),
- a second opening actuator (52b) for commanding an opening manoeuvre of the second switch (5), and
- a second sensor (54b) for delivering a second signal (If) indicator of closure of the second switch (5),

this source inverter being **characterized in that** it comprises:

- at least one first link (57a) connected to the first sensor (54a) with a view to receiving a first signal indicator of closure (If) of the first switch (4) and a second link (57b) with a view to receiving a second signal indicator of closure (Ifb) of the second switch (5),
- at least one third link (56a) for commanding the first opening actuator (52a) and a fourth link (56b) for commanding the second opening actuator (52b),
- at least one fifth link (55a) for commanding the first closing actuator (51a) and a sixth link (55b) for commanding the second closing actuator (51b), and
- a processing unit for implementing the connecting method according to Claims 1 to 10.

**12.** Source inverter (60) according to the preceding claim, **characterized in that** the first and second closing actuators (51a, 51b) of the first and second switches (4, 5) are activated by a DC voltage and **in that** the source inverter (60) transmits a DC voltage over the fifth and sixth links (55a, 55b) in order to command the first and second closing actuators (51a, 51b) of the first and second switches (4, 5), respectively.

**13.** Source inverter (60) according to either of Claims 11 and 12, **characterized in that** the first and second opening actuators (52a, 52b) of the first and second switches (4, 5) are activated by a DC voltage and that the source inverter (60) transmits a DC voltage over the third and fourth links (56a, 56b) in order to command the first and second opening actuators (52a, 52b) of the first and second switches (4, 5), respectively.

**14.** Electrical switch (4) intended to be commanded by a source inverter (60) according to any one of Claims 11 to 13, said switch comprising at least:

- at least one upstream connection terminal (12) intended to be connected to a source (1, 2) delivering electrical power,
- at least one downstream connection terminal (13) intended to be connected to an electrical power distribution line (7),
- electrical contacts (41) for establishing or interrupting the flow of power between at least the upstream terminal (12) and the downstream terminal (13),
- an opening actuator (51a) for actuating a mechanism (42) for opening the electrical contacts (41),
- a closing actuator (51a) for actuating a mechanism (46) for closing the electrical contacts (41),

said switch (4) being **characterized in that** the actuation of the mechanism (42) for opening the electrical contacts (41) acts on the mechanism (46) for closing the contacts in order to interrupt a closing movement of said contacts (41).

**FIG.1**

**FIG.2**

Fig.3A

Tr1

0    t

Fig.3B

Tmd1

0    t

Fig.3C

Tmc2

0    t

Fig.3D

Tob

0    t

Fig.3E

If

0    t

Fig.3F

Tmd2

0    t

Fig.3G

Source 1    Source 2

0    Tt    t

Fig.4A   Tmd1
0                    t

Fig.4B   Tr2
0                    t

Fig.4C   Tmc2
0                    t

Fig.4D   Tob
0                    t

Fig.4E   If
0                    t

Fig.4F   Tmd2
0                    t

Fig.4G   Source 1        Source 2
0                Tt        t

Fig.5A    Tr1

Fig.5B    Tmd1

Fig.5C    Tmc2

Fig.5D    Tob

Fig.5E    If

Fig.5F    Tmd2

Fig.5G    Source 1    Tt

**FIG.6**

EP 3 609 034 B1

100 — Mesure Tmc1, Tmc2, Tmd1, Tmd2

200

210 — Tmc2 < (Tmd1 +Tt)  Non / Oui

300

310 — Tmc2 > (Tmd1 +Tt)  Non / Oui

220 — Tempo Tr2

320 — Tempo Tr1

230 — Manœuvre connexion Source 2 Tmc2

Ouverture fenêtre observation Tob

330 — Manœuvre déconnexion Source 1 Tmd1

240

250 — Indicateur fermeture If ?  Non / Oui

260 — Fenêtre observation Tob fermée ?  Non / Oui

270 — Manœuvre déconnexion Source 2 Tmd2

280 — Transfert annulé

290 — Transfert effectué

**FIG.7**

**FIG.8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014001860 A1
- EP 1014534 A1
- US 2016233720 A
- EP 0471178 A
- CN 103683469